# EUROPEAN PATENT APPLICATION

(11) **EP 4 624 220 A1**
(43) Date of publication of application: **01.10.2025**
(21) Application number: 23894414.4
(22) Date of filing: 07.11.2023
(51) Int. Cl.: B60K 35/23

(54) **VEHICULAR DISPLAY CONTROL DEVICE, VEHICULAR DISPLAY CONTROL METHOD, AND VEHICULAR DISPLAY CONTROL PROGRAM**

(30) Priority: 21.11.2022 JP 2022185959
(71) Applicant: TOYOTA JIDOSHA KABUSHIKI KAISHA, Toyota-shi Aichi 471-8571 (JP)
(72) Inventor: TSUDA, Hideki, Toyota-shi, Aichi 471-8571 (JP); AOKI, Toshinori, Toyota-shi, Aichi 471-8571 (JP)
(74) Representative: J A Kemp LLP
(86) International application number: PCT/JP2023/040099
(87) International publication number: WO 2024/111403

(57) **Abstract**

A vehicle display control device includes a first image generating section that generates a first image displayed at a display position based on a position of an object at a vehicle front side, and a second image generating section that generates a second image different from the first image. A display control section controls such that, in a case in which the display position of the first image overlaps with the second image in a display area which includes a first area that is assigned to display the first image and a second area that is assigned to display the second image and which is provided at a front portion of a vehicle cabin interior, the first image is displayed at a position that does not overlap with the second image.

## Description

### Technical Field

The present disclosure relates to a vehicle display control device, a vehicle display control method, and a vehicle display control program.

### Background Art

Japanese Patent Application Laid-Open (JP-A) No. 2017-037634 discloses a display system in which information on a preceding vehicle, obtained through communication between vehicles, is displayed at a display area on a windshield. In the technology disclosed in JP-A No. 2017-037634, it is proposed that another vehicle image, which indicates information on a preceding vehicle, be displayed at a first display area while being correlated to a position of the preceding vehicle that can be seen through the windshield, and that a host vehicle image indicating information on a host vehicle be displayed at a second display area.

### SUMMARY OF THE INVENTION

### Problem to be Solved by the Invention

Incidentally, in a case in which an image based on a position of an object at a vehicle front side is displayed, as in the technology described in JP-A No. 2017-037634, a position of the image in a display area is changed due to a change in a relative positional relationship between the vehicle and the object. Therefore, when an image is displayed at a display position based on a position of an object, and the image and another image overlap with each other, there is a risk that display of each image may be unclear. On the other hand, in a case in which overlapping of images is avoided by deleting one image, the amount of information in the display area is reduced, and there is a risk of an adverse effect on an occupant appropriately recognizing vehicle information. The technology described in JP-A No. 2017-037634 does not take this point into consideration, and there is room for improvement.

In consideration of the above-described circumstances, an object of the present disclosure is to provide a vehicle display control device, a vehicle display control method, and a vehicle display control program which are capable of clearly displaying respective images in a display area in which an image based on a position of an object at a vehicle front side and another image are displayed, without decreasing an amount of information in the display area.

### Means for Solving the Problem

A vehicle display control device according to a first aspect of the present disclosure includes: a first image generating section that generates a first image displayed at a display position based on a position of an object at a vehicle front side; a second image generating section that generates a second image different from the first image; and a display control section that, in a case in which the display position of the first image overlaps with the second image in a display area, which includes a first area that is assigned to display the first image and a second area that is assigned to display the second image and which is provided at a front portion of a vehicle cabin interior, controls such that the first image is displayed at a position that does not overlap with the second image.

In the vehicle display control device according to the first aspect of the present disclosure, a first image, which is displayed at a display position based on a position of an object at the vehicle front side, is generated by a first image generating section. Further, a second image that is different from the first image is generated by a second image generating section. The first image and the second image are displayed at a display area that is provided at a front portion of a vehicle cabin interior, under control of a display control section.

The display area includes a first area that is assigned to display the first image, and a second area that is assigned to display the second image. In a case in which the display position of the first image overlaps with the second image in the display area, the display control section controls such that the first image is displayed at a position that does not overlap with the second image. Therefore, even in a case in which the display position of the first image moves significantly due to a change in the relative positional relationship between a host vehicle and the object, the first image is displayed at a position at which the first image does not overlap with the second image. This enables each image to be clearly displayed without decreasing the amount of information in the display area. It should be noted that "in a case in which a display position of the first image overlaps with the second image" does not mean that the first image is actually displayed in a state overlapping with the second image on the display area, but refers to a case in which it is predicted that the display position of the first image will overlap with the second image based on display position information on the display area including the generated first image and second image.

A vehicle display control device according to a second aspect of the present disclosure has the configuration according the first aspect, wherein a display position of the second image is fixed in the second area by the display control section.

In the vehicle display control device according to the second aspect of the present disclosure, different from the first image that is displayed based on the position of the object at the vehicle front side, the display position of the second image is fixed. Therefore, in a case in which the display position of the first image overlaps with the second image, the display control section controls such that the first image is displayed at a position at which the first image does not overlap with the second image, without changing the display position of the second image. This enables an occupant to reduce movement of his/her line of sight when viewing an image at the display area, thereby enabling the vehicle to travel more smoothly and safely.

A vehicle display control device according to a third aspect of the present disclosure has the configuration according to the first aspect or the second aspect, wherein: at least an area at a vehicle upper side of the second area of the display area is assigned as the first area; and in a case in which the display position of the first image moves from the first area toward the second area and overlaps with the second image due to the object approaching, the display control section causes the first image to be fixedly displayed at an upper end side of the second area.

When the host vehicle and the object approach each other, the display position of the first image moves from the first area toward the second area, and there are cases in which the first image overlaps with the second image. In such cases, in the vehicle display control device according to the third aspect, the display control section causes the first image to be fixedly displayed at the upper end side of the second area. Therefore, the display position of the first image is fixed along the trajectory of movement in conjunction with the object approaching. Accordingly, unease felt by the occupant is alleviated in a case in which an object at the vehicle front side has approached, and travel of the vehicle becomes smoother and safer.

A vehicle display control device according to a fourth aspect of the present disclosure has the configuration according to the first aspect or the second aspect, wherein: the first image generating section generates the first image when a predetermined driving system based on the position of the object is activated; and after the display position of the first image has become in a state of not overlapping with the second image in the display area due to a relative positional relationship between a host vehicle and the object, the display control section starts display of the first image.

In the vehicle display control device according to the fourth aspect of the present disclosure, when a predetermined driving system based on the position of an object at the vehicle front side is activated, the first image is generated by the first image generating section. Further, after the display position of the first image has become in a state of not overlapping with the second image in the display area due to a relative positional relationship between the host vehicle and the object, the display control section starts display of the first image. For example, in a case in which an object at the vehicle front side and the host vehicle are suddenly approaching each other during operation of the driving system, the display position of the first image may overlap with the second image. In such a case, the display control section deliberately does not cause display of the first image, but starts display of the first image after the display position of the first image has become in a state in which the first image does not overlap with the second image. As a result, when display of the first image starts, the first image is displayed correlated to the position of the object at the vehicle front side. This reduces unease felt by the occupant, and enables the vehicle to travel more smoothly and safely.

A vehicle display control device according to a fifth aspect of the present disclosure has the configuration according to the first aspect or the second aspect, wherein the display control section expands the first area by assigning a portion of the second area as the first area, in conjunction with display of the first image starting.

In the vehicle display control device according to the fifth aspect of the present disclosure, the display control section expands the first area by assigning a portion of the second area as the first area, in conjunction with display of the first image starting. Therefore, since the area in which the first image can be displayed is expanded based on the position of the object, it is expected that the frequency at which the display position of the first image overlaps with the second image is reduced, thereby enabling the vehicle to travel more smoothly and safely.

A vehicle display control device according to a sixth aspect of the present disclosure has the configuration according to the first aspect or the second aspect, wherein the first image is configured by an AR image that is displayed so as to be superimposed on a scene at the vehicle front side as viewed from the vehicle cabin interior, by the first image being displayed, at a display position based on the position of the object in the display area, by the display control section.

In the vehicle display control device according to the sixth aspect of the present disclosure, the first image is configured by an AR image, and is displayed so as to be superimposed on a scene at the vehicle front side as viewed from the vehicle cabin interior. This enables the occupant to intuitively understand and respond to information represented by the image, thereby enabling the vehicle to travel more smoothly and safely.

A vehicle display control method according to a seventh aspect of the present disclosure is a method in which a computer executes processing, the processing including: generating a first image displayed at a display position based on a position of an object at a vehicle front side; generating a second image different from the first image; and in a case in which the display position of the first image overlaps with the second image in a display area, which includes a first area that is assigned to display the first image and a second area that is assigned to display the second image and which is provided at a front portion of a vehicle cabin interior, controlling such that the first image is displayed at a position that does not overlap with the second image.

A vehicle display control program according to an eighth aspect of the present disclosure: generates a first image displayed at a display position based on a position of an object at a vehicle front side; generates a second image different from the first image; and in a case in which the display position of the first image overlaps with the second image in a display area, which includes a first area that is assigned to display the first image and a second area that is assigned to display the second image and which is provided at a front portion of a vehicle cabin interior, controls such that the first image is displayed at a position that does not overlap with the second image.

### Effect of the Invention

As explained above, the vehicle display control device, the vehicle display control method, and the vehicle display control program according to the present disclosure can clearly display respective images in a display area in which an image based on a position of an object at a vehicle front side and another image are displayed, without decreasing the amount of information in the display area.

### Brief Description of the Drawings

Fig. 1 is a schematic diagram illustrating a front portion of a vehicle cabin interior, viewed from a vehicle rearward side, of a vehicle to which a vehicle display control device according to the present exemplary embodiment has been applied.
Fig. 2 is a block diagram illustrating a hardware configuration of a vehicle display control device according to the present exemplary embodiment.
Fig. 3 is a block diagram illustrating a functional configuration of a vehicle display control device according to the present exemplary embodiment.
Fig. 4 is a diagram illustrating an example in which a second image is displayed at a display area, in a state in which an AR display function is turned off.
Fig. 5 is a diagram illustrating an example in which a first image and a second image are displayed at a display area, in a state in which an AR display function is turned on.
Fig. 6 is a diagram illustrating an example in which a first image and a second image are displayed at a display area, in a state in which a preceding vehicle, serving as an object at a vehicle front side, has approached a host vehicle.
Fig. 7 is a flowchart illustrating an example of a flow of display processing in the present exemplary embodiment.
Fig. 8 is a diagram illustrating a modified example in which a first image and a second image are displayed at a display area, in a state in which an AR display function is turned on.

### Mode for Implementing the Invention

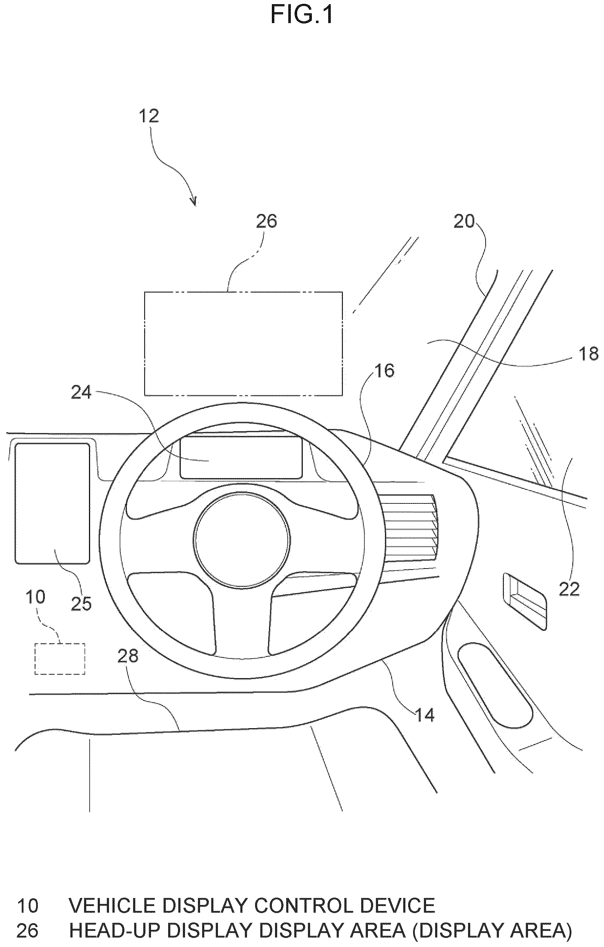

Explanation follows regarding a vehicle display control device 10 according to the present exemplary embodiment, with reference to Fig. 1 to Fig. 7.

As illustrated in Fig. 1, an instrument panel 14 is provided at a front portion of a vehicle cabin interior of a vehicle 12. The instrument panel 14 extends in a vehicle width direction, and a steering wheel 16 is provided at a vehicle right side of the instrument panel 14. Namely, in the present exemplary embodiment, as an example, a right hand drive vehicle is configured with the steering wheel 16 provided at the right side, and a driver's seat 28 is installed at the right side of the vehicle.

A windshield glass 18 is provided at a front end portion of the instrument panel 14. The windshield glass 18 extends in a vehicle vertical direction and the vehicle width direction to partition the vehicle cabin interior from an exterior of the vehicle cabin.

A vehicle right side end portion of the windshield glass 18 is fixed to a front pillar 20 at a vehicle right side. Specifically, the front pillar 20 extends substantially in the vehicle vertical direction, and the windshield glass 18 is fixed to a vehicle width direction inner side end portion of the front pillar 20. Further, a front end portion of a front side glass 22 is fixed to a vehicle width direction outer side end portion of the front pillar 20. It should be noted that a vehicle left side end portion of the windshield glass 18 is fixed to a front pillar, which is not illustrated in the drawings, at a vehicle left side.

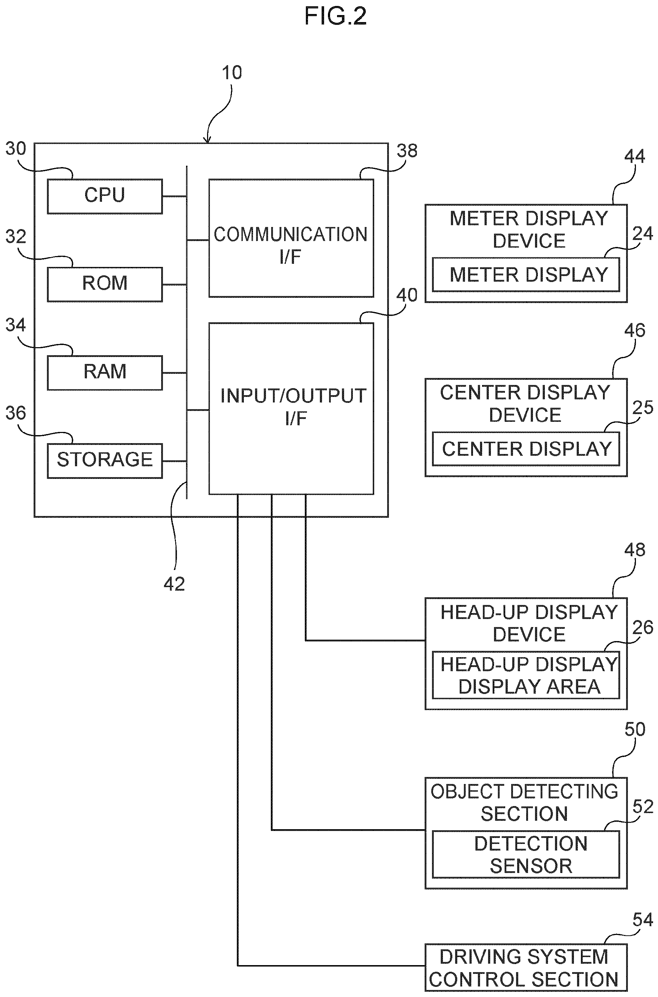

It should be noted that a meter display 24 is provided at the instrument panel 14. The meter display 24 is provided at the vehicle front side with respect to the driver's seat 28, at the vehicle right side of the instrument panel 14, and is an area at which a predetermined image is displayed by a meter display device 44 (see Fig. 2) serving as a vehicle display device. The meter display 24 is connected to various meter devices installed at the vehicle 12, and is provided at a position that enters a field of view of a driver in a state in which the driver has oriented their line of sight forward of the vehicle.

A center display 25 is provided at a vehicle width direction central portion of the instrument panel 14. As an example, the center display 25 of the present exemplary embodiment is formed in a substantially rectangular shape with a longitudinal direction in a vertical direction, and is an area at which a predetermined image is displayed by a center display device 46 (see Fig. 2) serving as a vehicle display device.

The windshield glass 18 is provided with a head-up display display area 26 (hereafter simply referred to as the "display area 26"). The display area 26 is provided at a vehicle upper side of the meter display 24, and is configured by a projection plane that is projected by a head-up display device 48 (see Fig. 2) serving as a vehicle display device. Specifically, the head-up display device 48 is provided at a vehicle front side of the instrument panel 14, and a configuration is such that an image is projected onto the display area 26 of the windshield glass 18 from the head-up display device 48. Namely, the display area 26 is a part of the windshield glass 18 serving as a projection plane of the head-up display device 48.

The vehicle 12 is provided with a vehicle display control device 10. The vehicle display control device 10 of the present exemplary embodiment is configured by, for example, one or plural electronic control units (ECUs). Further, the vehicle display control device 10 of the present exemplary embodiment causes display of various images at the display area 26 of the head-up display device 48. The vehicle display control device 10 controls display positions of the respective images such that the images do not overlap with each other, thereby enabling the vehicle to travel smoothly and safely.

### Hardware Configuration of the Vehicle Display Control Device 10

Fig. 2 is a block diagram illustrating a hardware configuration of the vehicle display control device 10. As illustrated in Fig. 2, the vehicle display control device 10 includes a central processing unit (CPU; serving as a processor) 30, read only memory (ROM) 32, random access memory (RAM) 34, storage 36, a communication interface (communication I/F) 38, and an input/output interface (input/output I/F) 40. These respective configurations are communicably connected to each other via a bus 42.

The CPU 30 is a central processing unit that executes various programs and controls various components. Namely, the CPU 30 reads a program from the ROM 32 or the storage 36, and executes the program using the RAM 34 as a workspace. The CPU 30 controls the respective configurations described above and performs a variety of computation processing in accordance with programs stored in the ROM 32 or the storage 36.

The ROM 32 stores various programs and various data. The RAM 34 serves as a workspace to temporarily store programs and data. The storage 36 is configured by a hard disk drive (HDD) or a solid state drive (SSD), and stores various programs including an operating system, as well as various data. In the present exemplary embodiment, programs, various data, and the like for performing display processing, which is described later, are stored in the ROM 32 or the storage 36.

The communication I/F 38 is an interface for the vehicle display control device 10 to communicate with an external server and other devices and, for example, a protocol such as a controller area network (CAN), Ethernet (registered trademark), long term evolution (LTE), a fiber distributed data interface (FDDI), or Wi-Fi (registered trademark) is used.

The input/output I/F 40 is electrically connected to the meter display device 44, the center display device 46, and the head-up display device 48. The meter display device 44 causes display of predetermined information at the meter display 24. The center display device 46 causes display of predetermined information at the center display 25. The head-up display device 48 causes display of predetermined information at the display area 26.

Further, the input/output I/F 40 is electrically connected to an object detecting section 50 and a driving system control section 54.

The object detecting section 50 is capable of detecting an object that is at a vehicle periphery (front, side, and rear). Further, the object detecting section 50 can acquire various types of information relating to the object, such as a distance or a direction to the detected object. An object to be detected includes a pedestrian, a two-wheel vehicle, another vehicle, a road sign, a travel lane line, an information board, and the like. Detection sensors 52 respectively provided at front, side, and rear portions of the vehicle 12, for example, are used for detecting an object. The detection sensors 52 are configured by combining known sensors typified by a camera, an ultrasonic sensor, a millimeter-wave radar, a LIDAR, and the like.

The driving system control section 54 is capable of controlling various driving systems installed at the vehicle 12. Various driving systems include driving systems based on a position of an object detected by the object detecting section 50. The driving system based on the position of the object detected by the object detecting section 50 includes an automatic driving system and a driving assistance system. The driving assistance system includes various Advanced Driving Assistant Systems (ADAS) such as a stopping system and a starting system for avoiding contact between a detected object and the vehicle 12, an adaptive cruise control (ACC) system, and a lane tracing assist (LTA) system. The driving system control section 54 controls various actuators installed at the vehicle 12, and actuates various driving systems by automatically performing some or all of the operations of the vehicle 12, such as an accelerator, a brake, a direction indicator, and steering.

### Functional Configuration of the Vehicle Display Control Device 10

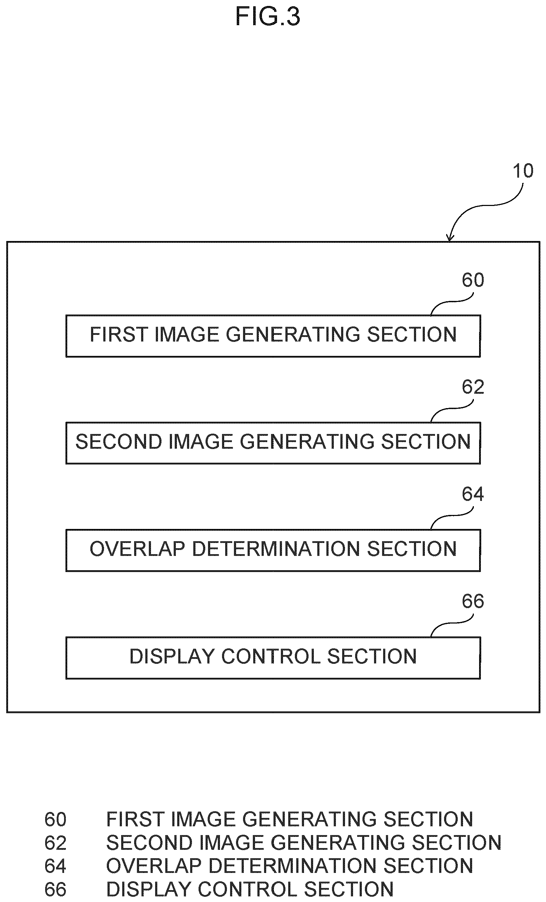

The vehicle display control device 10 implements various functions using the above-described hardware resources. Explanation follows regarding functional configurations implemented by the vehicle display control device 10, with reference to Fig. 3.

As illustrated in Fig. 3, the functional configurations of the vehicle display control device 10 include a first image generating section 60, a second image generating section 62, an overlap determination section 64, and a display control section 66. The respective functional configurations are implemented by the CPU 30 reading and executing programs stored in the ROM 32 or the storage 36.

The first image generating section 60 generates a first image to be displayed at the display area 26. The first image is an image that is displayed at a display position based on a position of an object at the vehicle front side, and the display position is determined corresponding to a relative positional relationship between the vehicle 12 (a host vehicle) and the object. For example, in a case in which an object at the vehicle front side is detected by the object detecting section 50 in conjunction with operation of the predetermined driving system, the first image generating section 60 generates a first image as an image indicating the position of the detected object.

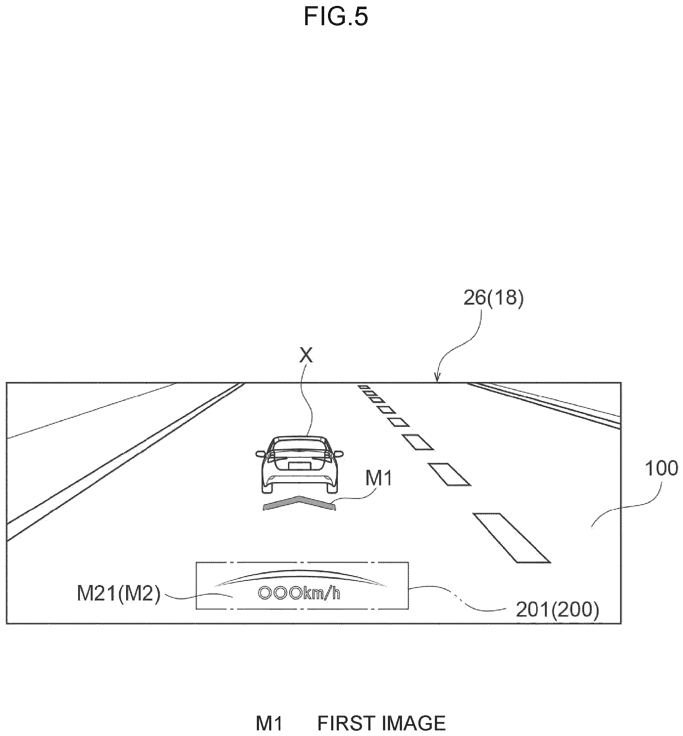

As illustrated in Fig. 5, a first image M1 of the present exemplary embodiment is configured by an AR image. The AR image is an image drawn using augmented reality technology. Namely, a scene at the vehicle front side is visible through the windshield glass 18 at the display area 26, and the first image M1 is displayed superimposed on the scene. Therefore, the first image is displayed in a virtual space that is set at the display area 26 so as to obtain a sense of depth, and in a case in which a display position of the first image M1 moves from the back of the virtual space toward the front, the image size is displayed so as to gradually increase. This enables an occupant, who is looking at the display area, to intuitively understand an object at the vehicle front side approaching or moving away.

Further, in the present exemplary embodiment, in a case in which an AR image display function of the head-up display device 48 is turned on due to an occupant operation, the first image is generated by the first image generating section 60.

In the example illustrated in Fig. 5, a state in which a preceding vehicle X is detected as an object at the vehicle front side due to operation of the ACC system of the vehicle 12 is illustrated. As illustrated in this diagram, when the AR image display function is turned on, the first image M1 is displayed as an image indicating the position of the preceding vehicle X. The first image M1 is displayed superimposed at a rear position of the preceding vehicle X, which can be seen through the windshield glass 18.

The second image generating section 62 generates a second image to be displayed at the display area 26. Unlike the first image, the second image is an image for which the display position at the display area 26 is fixed. The second image is, as an example, an image that indicates information relating to travel of the host vehicle, such as a vehicle speed of the vehicle 12 and a driving system in operation.

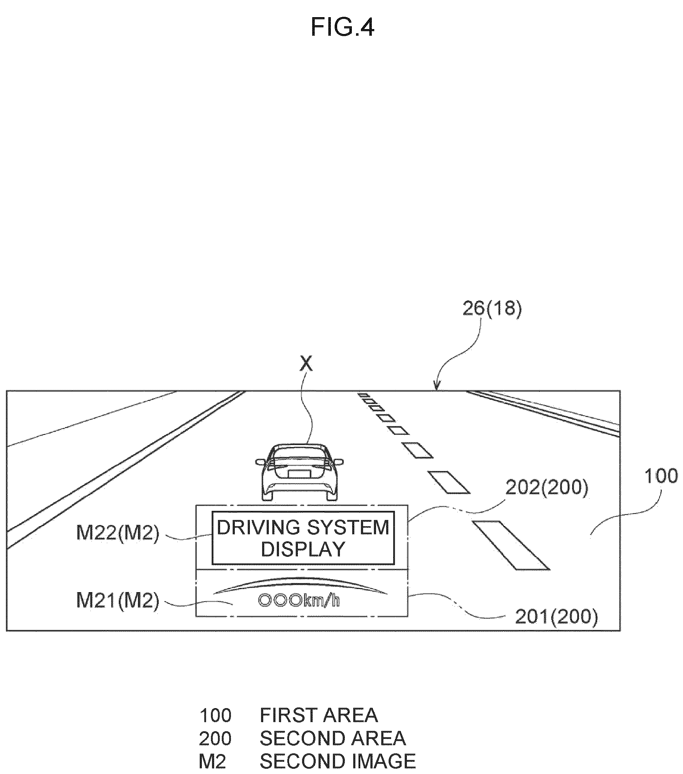

In the example illustrated in Fig. 4, two second images M2, including a speed display M21 indicating a speed of the vehicle 12, and a driving system display M22 indicating a driving system in operation, are fixedly displayed at predetermined positions at the display area 26. It should be noted that the driving system display M22 indicates that a predetermined driving system, typified by an ACC system or the like, is in operation. The driving system display M22 is displayed in a case in which the AR image display function of the head-up display device 48 is turned off. Namely, in a state in which the AR image display function is turned off, the driving system display M22 serving as the second image M2 is displayed, and when the AR image display function is turned on, the first image M1 is displayed in place of the driving system display M22.

The overlap determination section 64 determines overlap between the display position of the first image and the second image at the display area 26. Specifically, based on display position information at the display area, including the generated first image and second image, in a case in which it is predicted that the coordinates of the first image will overlap with the coordinates of the second image on the display area 26, the overlap determination section 64 determines that the display position of the first image will overlap with the second image.

As illustrated in Fig. 4, in the present exemplary embodiment, the display area 26 on the windshield glass 18 includes a first area 100 that is assigned to display the first image, and a second area 200 that is assigned to display the second image. As an example, the overlap determination section 64 determines that the display position of the first image will overlap with the second image in a case in which the display position (coordinates) of the first image is within the second area, based on display position information of the first image generated by the first image generating section 60.

The display control section 66 causes display of the first image generated by the first image generating section 60 and the second image generated by the second image generating section 62 at the display area 26. Explanation follows regarding examples in which the first image and the second image are displayed at the display area 26 in a case in which the ACC system of the vehicle 12 is activated, with reference to Fig. 4 to Fig. 6.

Fig. 4 illustrates a state in which the AR image display function of the head-up display device 48 is turned off due to an occupant operation. Therefore, the first image is not displayed at the first area 100 on the display area 26. On the other hand, the speed display M21 and the driving system display M22 are displayed as the second image M2 at the second area 200 on the display area.

It should be noted that the second area 200 is a rectangular area that is deployed at a lower end central portion of the display area 26. The first area 100 is deployed at both left and right sides and the upper side of the second area 200 so as to surround the periphery of the second area 200. As described below, in a case in which the range of the second area 200 is changed due to ON/OFF of the AR image display function of the head-up display device 48, at least the area at a vehicle upper side of the second area 200 is assigned as the first area 100.

The second area 200 includes, in a state in which the AR image display function is turned off, a main area 201 that configures a lower portion of the second area and an auxiliary area 202 that configures an upper portion of the second area. The main area 201 is assigned as the second area in both of an ON state and an OFF state of the AR image display function. The auxiliary area 202 is assigned as the second area in a case in which the AR image display function is in the OFF state and a predetermined driving system is in operation.

In the present exemplary embodiment, the speed display M21 is displayed at the main area 201. The driving system display M22 is displayed at the auxiliary area 202 at an upper side of the main area 201.

Fig. 5 illustrates a state in which the AR image display function of the head-up display device 48 is turned on by an occupant operation. The display control section 66 deletes the second image M2 (the driving system display M22) displayed at the auxiliary area 202 of the second area 200, and starts display of the first image M1 in place of the second image M2.

In a case of deleting the driving system display M22 displayed at the auxiliary area 202 of the second area 200, the display control section 66 changes the auxiliary area 202 to the first area 100. Namely, the display control section 66 expands the first area 100 by allocating a portion of the second area 200 to the first area 100 in conjunction with display of the first image M1 starting.

Further, the display control section 66 controls such that the first image M1 and the second image M2 are displayed at positions that do not overlap with each other based on a determination result of the overlap determination section 64.

The display control section 66 starts display of the first image M1 after the display position of the first image M1 is in a state of not overlapping with the second image M2 in the display area 26, based on the determination result of the overlap determination section 64. Namely, during operation of the ACC system, in a case in which a distance between the vehicle 12 (the host vehicle) and the preceding vehicle X is closing, the first image M1 is not displayed until a distance between the vehicle 12 and the preceding vehicle X is ensured.

Specifically, as illustrated in Fig. 5, in a case in which a vehicle-to-vehicle distance between the vehicle 12 and the preceding vehicle X maintains an appropriate distance set in advance in the ACC system, the display position based on the position of the preceding vehicle X corresponds to a position within the first area 100. Therefore, due to the overlap determination section 64 determining that the display position of the first image will not overlap with the second image M2 displayed at the second area 200, the overlap determination section 64 starts display of the first image M1 such that the first image M1 is superimposed at a rear position of the preceding vehicle X.

As a result, the first image M1 is displayed at a position superimposed with the preceding vehicle X that can be seen through the windshield glass 18, and, in conjunction with operation of the ACC system, the occupant can clearly recognize that the preceding vehicle X has been detected.

On the other hand, in a case in which the preceding vehicle X has approached the vehicle 12 due to a sudden stop or a sudden deceleration of the preceding vehicle X during operation of the ACC system, the display position of the first image M1 moves from an upper portion of the first area 100 into the second area 200. In such a case, the overlap determination section 64 determines that the display position of the first image M1 overlaps with the second image M2 (the speed display M21). Therefore, the display control section 66 moves the display position of the first image M1, and controls such that the first image M1 is displayed at a position that does not overlap with the second image M2.

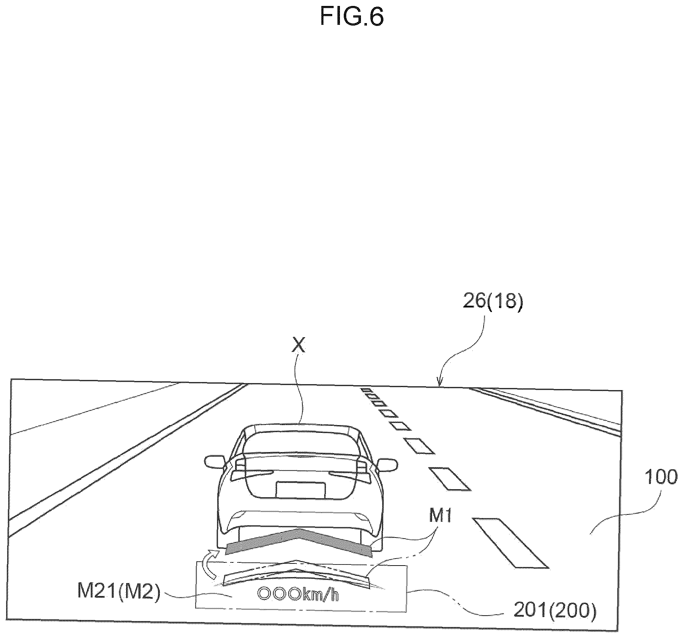

Specifically, as illustrated in Fig. 6, the first image M1 is fixedly displayed at the position of the first area 100 at an upper end side of the second area 200. Therefore, the first image M1 and the second image M2 (speed display M21) are continuously displayed at positions that do not overlap with each other. This enables each image to be clearly displayed without the images overlapping.

### Operation

Next, explanation follows regarding operation of the present exemplary embodiment.

### Example of Display Processing

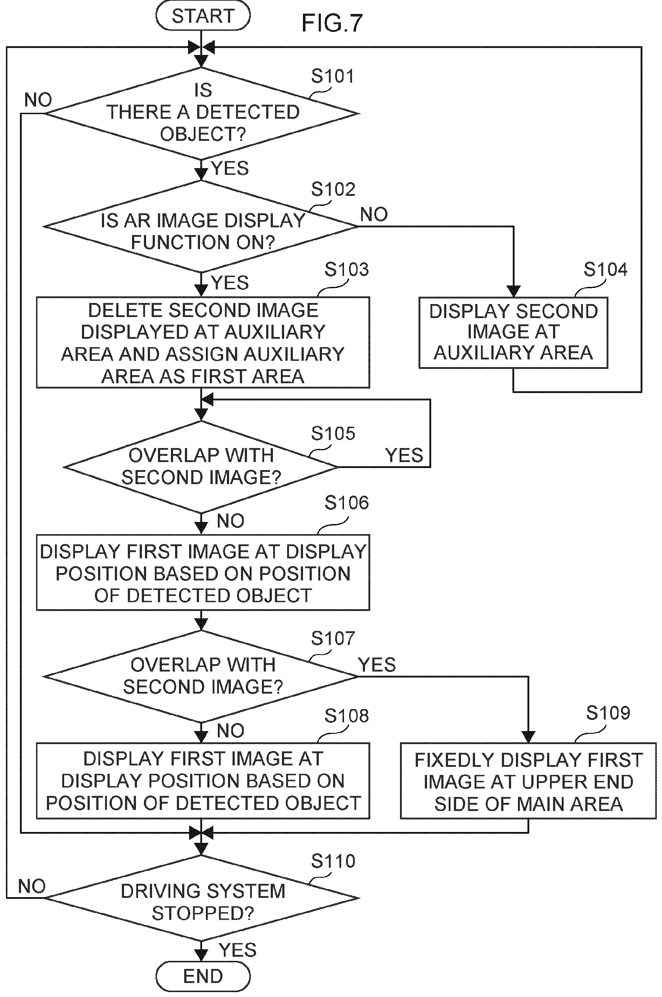

Explanation follows regarding an example of display processing in the vehicle display control device 10 according to the present exemplary embodiment, with reference to the flowchart illustrated in Fig. 7. The display processing is executed, for example, when a predetermined driving system, based on the position of an object at the vehicle front side, has been activated. The display processing is executed by the CPU 30 reading a program from the ROM 32 or the storage 36 and loading the program in the RAM 34.

At step S101, the CPU 30 determines whether or not there is a detected object at the vehicle front side. Specifically, in a case in which an object related to the driving system in operation is detected at the vehicle front side by the function of the object detecting section 50, the determination at step S101 is affirmative, and the CPU 30 transitions to the processing of step S102. On the other hand, in a case in which an object is not detected at the vehicle front side, the determination at step S101 is negative, and the CPU 30 transitions to the processing of step S110.

At step S102, the CPU 30 determines whether the AR image display function is ON or OFF. In a case in which the AR image display function is ON, the determination at step S102 is affirmative, and the CPU 30 transitions to the processing of step S103. On the other hand, in a case in which the AR image display function is OFF, the determination at step S102 is negative, and the CPU 30 transitions to the processing of step S104.

At step S103 (the AR image display function is ON), the CPU 30 deletes the second image M2 displayed at the auxiliary area 202 serving as the second area 200, and assigns the auxiliary area 202 as the first area 100. Specifically, the auxiliary area 202 is excluded from the second area 200 illustrated in Fig. 4, and the second area 200 is reduced to the area illustrated in Fig. 5. Therefore, the first area 100 is expanded, and an area that is capable of displaying the first image M1 superimposed on the detected object is expanded.

At step S104 (the AR image display function is OFF), the CPU 30 causes display of the second image M2 at the auxiliary area 202 without causing display of the first image M1. In this state, as illustrated in Fig. 4, a second image M2 (speed display M21 and driving system display M22) is displayed in each of the main area 201 and the auxiliary area 202 which configure the second area 200.

At step S105, the CPU 30 determines whether or not there will be overlap between the display position based on the position of the detected object, and the second image. In a case in which sufficient distance between the vehicle 12 and the detected object has been ensured during operation of the driving system, the determination at step S105 is negative, and when the vehicle 12 and the detected object are approaching each other, the determination at step S105 is affirmative. Specifically, in a case in which it is determined by the function of the overlap determination section 64 that the display position based on the detected object will overlap with the second image M2 displayed at the main area 201, the determination at step S105 is affirmative, the CPU 30 returns to the processing of step S105, and does not display the first image M1. This enables display of the first image M1 to be avoided from starting directly after the activation of the driving system, in a state in which there is a gap between the position of the object that has approached the vehicle 12 and the display position of the first image. On the other hand, in a case in which it is determined by the function of the overlap determination section 64 that the display position based on the detected object will not overlap with the second image M2 displayed at the main area 201, the determination at step S105 is negative, and the CPU 30 transitions to the processing of step S106.

At step S106, the CPU 30 displays the first image M1 at a display position based on the position of the detected object. Specifically, as illustrated in Fig. 5, the first image M1, which indicates the position of an object, is displayed superimposed on the object (the preceding vehicle X) that can be seen through the windshield glass 18.

At step S107, the CPU 30 determines whether or not there is overlap between the display position based on the position of the detected object and the second image. The determination at step S107 is performed after display of the first image M1 has started.

The determination at step S107 is performed based on the function of the overlap determination section 64 in the same manner as in step S105. When the determination at step S107 is negative, the CPU 30 transitions to the processing of step S108, and causes display of the first image M1 in the same manner as in step S106. On the other hand, in a case in which the determination at step S107 is affirmative due to the vehicle 12 and the detected object suddenly approaching each other, or the like, the CPU 30 transitions to the processing of step S109.

In a case in which the display position based on the position of the detected object overlaps with the main area 201 of the second area 200 due to the vehicle 12 and the detected object suddenly approaching each other, or the like, the CPU 30 controls such that the first image M1 and the second image M2 are displayed at positions that do not overlap with each other at step S109. Specifically, as illustrated in Fig. 6, the first image M1 is fixedly displayed at an upper side of the main area 201.

At step S110, the CPU 30 determines whether or not the driving system is in operation. In a case in which the driving system is stopped, the determination at step S110 is affirmative, and the CPU 30 ends the display processing. On the other hand, in a case in which the driving system is in operation, the determination at step S110 is negative, and the CPU 30 returns to the processing of step S101.

As described above, in the vehicle display control device 10 of the present exemplary embodiment, the first image M1 is displayed at the display area 26 on the windshield glass 18 in conjunction with operation of the driving system, based on the position of an object at the vehicle front side, typified by an ACC system or the like.

The first image M1 is displayed at a display position based on the position of the object, such that the first image M1 is superimposed on the object that can be seen through the windshield glass 18. On the other hand, in a case in which the display position of the first image M1 overlaps with the second image M2 due to the vehicle 12 and the object approaching each other, the vehicle display control device 10 controls such that the first image M1 is displayed at a position that does not overlap with the second image M2.

By such control, even in a case in which the display position of the first image M1 moves significantly due to a change in the relative positional relationship between the host vehicle and an object at the vehicle front side, the first image M1 is displayed at a position at which the first image M1 and the second image M2 do not overlap. This enables each image to be clearly displayed without decreasing the amount of information at the display area 26.

Specifically, as illustrated in Fig. 5, when an object (the preceding vehicle X) approaches the vehicle 12, the first image M1 is fixedly displayed at the upper end side of the second area 200 (the main area 201). Therefore, the display position of the first image M1 is fixed along the trajectory of movement of the object approaching from the front side of the vehicle 12, thereby alleviating unease felt by the occupant. As a result, travel of the vehicle becomes smoother and safer.

Further, in the present exemplary embodiment, unlike the first image M1 that is displayed based on the position of an object at the vehicle front side, the display position of the second image M2 is fixed inside the second area 200. Therefore, in a case in which the display position of the first image M1 overlaps with the second image M2, the display control section 66 controls such that the first image M1 is displayed at a position that does not overlap with the second image M2, without changing the display position of the second image M2. This enables the occupant to reduce movement of his/her line of sight when looking at the image at the display area 26, thereby enabling the vehicle to travel more smoothly and safely.

Furthermore, in the present exemplary embodiment, when a predetermined driving system based on the position of an object at the vehicle front side is activated, the first image M1 is generated by the first image generating section 60. After the display position of the first image M1 has become in a state of not overlapping with the second image M2 in the display area 26 due to a relative positional relationship between the vehicle 12 (the host vehicle) and the object, the display control section 66 starts display of the first image M1. For example, in a case in which an object at the vehicle front side and the host vehicle suddenly approach each other during operation of the driving system, there is sometimes a case in which the display position of the first image M1 overlaps with the second image M2. In such a case, the display control section 66 deliberately does not cause display of the first image M1, but starts display of the first image M1 after the display position of the first image M1 has become in a state in which the first image does not overlap with the second image M2. As a result, when display of the first image M1 starts, the first image M1 is displayed correlated to the position of the object at the vehicle front side. This reduces unease felt by the occupant, and enables the vehicle to travel more smoothly and safely.

In addition, in the present exemplary embodiment, in conjunction with display of the first image M1 starting, the first area 100 is expanded by assigning the auxiliary area 202 of the second area 200 as the first area 100. Therefore, since the area in which the first image M1 can be displayed is expanded based on the position of an object, it is expected that the frequency at which the display position of the first image will overlap with the second image is reduced, thereby enabling the vehicle to travel more smoothly and safely.

### Modified Example 1

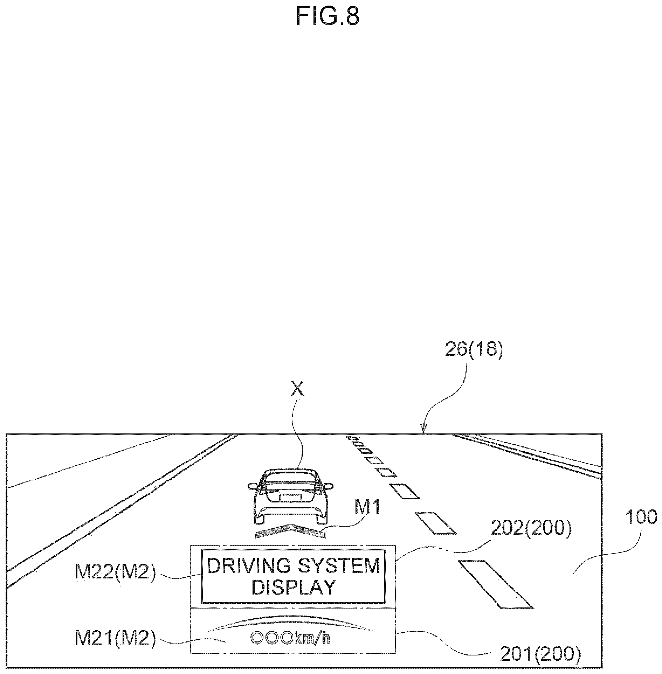

As illustrated in Fig. 8, in the present modified example, the auxiliary area 202 is included in the second area 200, even after display of the first image M1 has started. As in the present modified example, the second area 200 may not be reduced in size, but the driving system display M22 and the first image M1 that indicates the position of the preceding vehicle X may be displayed simultaneously. In such a case, when the preceding vehicle X has approached the vehicle 12, the first image M1 can be fixedly displayed at the upper end side of the auxiliary area, serving as the second area 200.

### Modified Example 2

Although not illustrated in the drawings, the second area 200 may be configured with only the main area 201. In such a case, the driving system display M22 may be omitted, or may be displayed at the main area 201.

Although explanation has been given regarding the vehicle display control device according to the exemplary embodiments, obviously various embodiments may be implemented within a range not departing from the gist of the present disclosure. For example, in the above-described exemplary embodiments, although a configuration is such that the first image and the second image are displayed at the display area of the display area 26, the present disclosure is not limited thereto. Namely, the first image and the second image may be displayed at the display area of the meter display 24 or the center display 25 which are illustrated in Fig. 1. In such cases, the first image can be displayed superimposed on an image obtained by capturing a scene at the vehicle front side.

Moreover, in the above-described exemplary embodiments, any of various types of processors other than the CPU 30 may execute the processing that the CPU 30 executes by reading a program. Examples of such processors include a programmable logic device (PLD) in which the circuit configuration can be modified post-manufacture, such as a field-programmable gate array (FPGA), or a specialized electric circuit that is a processor with a specifically-designed circuit configuration for executing specific processing, such as an application specific integrated circuit (ASIC). Further, virtual item display processing may be executed by one of these various types of processors, or may be executed by combining two or more of the same type or different types of processors, for example, the above-described processing may be executed by plural FPGAs, or a combination of a CPU and an FPGA, or the like. Moreover, a hardware configuration of the various processors is specifically formed as an electric circuit combining circuit elements such as semiconductor elements.

In addition, although various data is stored in the storage 36 in the above-described exemplary embodiments, there is no limitation thereto. For example, a non-transitory storage medium such as a compact disc (CD), a digital versatile disc (DVD), or universal serial bus (USB) memory may act as a storage section. In this case, various programs, data, and the like are stored in these storage media.

### Additional Notes

(1) A vehicle display control device includes: a first image generating section that generates a first image displayed at a display position based on a position of an object at a vehicle front side; a second image generating section that generates a second image different from the first image; and a display control section that, in a case in which the display position of the first image overlaps with the second image in a display area, which includes a first area that is assigned to display the first image and a second area that is assigned to display the second image and which is provided at a front portion of a vehicle cabin interior, controls such that the first image is displayed at a position that does not overlap with the second image.
(2) The vehicle display control device according to (1), wherein a display position of the second image is fixed in the second area by the display control section.
(3) The vehicle display control device according to (1) or (2), wherein: at least an area at a vehicle upper side of the second area of the display area is assigned as the first area; and in a case in which the display position of the first image moves from the first area toward the second area and overlaps with the second image due to the object approaching, the display control section causes the first image to be fixedly displayed at an upper end side of the second area.
(4) The vehicle display control device according to any one of (1) to (3), wherein: the first image generating section generates the first image when a predetermined driving system based on the position of the object is activated; and after the display position of the first image has become in a state of not overlapping with the second image in the display area due to a relative positional relationship between a host vehicle and the object, the display control section starts display of the first image.
(5) The vehicle display control device according to any one of (1) to (4), wherein the display control section expands the first area by assigning a portion of the second area as the first area, in conjunction with display of the first image starting.
(6) The vehicle display control device according to any one of (1) to (5), wherein the first image is configured by an AR image that is displayed so as to be superimposed on a scene at the vehicle front side as viewed from the vehicle cabin interior, by the first image being displayed, at a display position based on the position of the object in the display area, by the display control section.

The disclosure of Japanese Patent Application No. 2022-185959, filed on November 21, 2022, is hereby incorporated by reference in its entirety.

All documents, patent applications, and technical standards described herein are hereby incorporated by reference to the same extent as if each document, patent application, and technical standard were specifically and individually stated as being incorporated by reference.

## Claims

1. A vehicle display control device, comprising:
a first image generating section that generates a first image displayed at a display position based on a position of an object at a vehicle front side;
a second image generating section that generates a second image different from the first image; and
a display control section that, in a case in which the display position of the first image overlaps with the second image in a display area, which includes a first area that is assigned to display the first image and a second area that is assigned to display the second image and which is provided at a front portion of a vehicle cabin interior, controls such that the first image is displayed at a position that does not overlap with the second image.

2. The vehicle display control device according to claim 1, wherein a display position of the second image is fixed in the second area by the display control section.

3. The vehicle display control device according to claim 1 or claim 2, wherein:
at least an area at a vehicle upper side of the second area of the display area is assigned as the first area; and
in a case in which the display position of the first image moves from the first area toward the second area and overlaps with the second image due to the object approaching, the display control section causes the first image to be fixedly displayed at an upper end side of the second area.

4. The vehicle display control device according to claim 1 or claim 2, wherein:
the first image generating section generates the first image when a predetermined driving system based on the position of the object is activated; and
after the display position of the first image has become in a state of not overlapping with the second image in the display area due to a relative positional relationship between a host vehicle and the object, the display control section starts display of the first image.

5. The vehicle display control device according to claim 1 or claim 2, wherein the display control section expands the first area by assigning a portion of the second area as the first area, in conjunction with display of the first image starting.

6. The vehicle display control device according to claim 1 or claim 2, wherein the first image is configured by an AR image that is displayed so as to be superimposed on a scene at the vehicle front side as viewed from the vehicle cabin interior, by the first image being displayed, at a display position based on the position of the object in the display area, by the display control section.

7. A vehicle display control method in which a computer executes processing, the processing comprising:
generating a first image displayed at a display position based on a position of an object at a vehicle front side;
generating a second image different from the first image; and
in a case in which the display position of the first image overlaps with the second image in a display area, which includes a first area that is assigned to display the first image and a second area that is assigned to display the second image and which is provided at a front portion of a vehicle cabin interior, controlling such that the first image is displayed at a position that does not overlap with the second image.

8. A vehicle display control program that is executable by a computer to perform processing, the processing comprising:
generating a first image displayed at a display position based on a position of an object at a vehicle front side;
generating a second image different from the first image; and
in a case in which the display position of the first image overlaps with the second image in a display area, which includes a first area that is assigned to display the first image and a second area that is assigned to display the second image and which is provided at a front portion of a vehicle cabin interior, controlling such that the first image is displayed at a position that does not overlap with the second image.
